# EUROPEAN PATENT APPLICATION

(11) **EP 4 632 859 A1**
(43) Date of publication of application: **15.10.2025**
(21) Application number: 23943342.8
(22) Date of filing: 27.11.2023
(51) Int. Cl.: H01M 10/052, H01M 10/058, H01M 10/0567

(54) **LITHIUM-ION BATTERY, PREPARATION METHOD THEREFOR, AND ELECTRIC APPARATUS**

(30) Priority: 30.06.2023 CN 202310791379
(71) Applicant: Contemporary Amperex Technology Co., Limited, Ningde, Fujian 352100 (CN)
(72) Inventor: WU, Kai, Ningde, Fujian 352100 (CN); YANG, Chenglong, Ningde, Fujian 352100 (CN); JIANG, Hao, Ningde, Fujian 352100 (CN); ZHANG, Haiming, Ningde, Fujian 352100 (CN); GAO, Jingyu, Ningde, Fujian 352100 (CN); CHEN, Aosai, Ningde, Fujian 352100 (CN); LUO, Li, Ningde, Fujian 352100 (CN); YU, Honggang, Ningde, Fujian 352100 (CN); JIN, Haizu, Ningde, Fujian 352100 (CN)
(74) Representative: Ziebig Hengelhaupt Intellectual Property Attorneys Patentanwaltskanzlei PartGmbB
(86) International application number: PCT/CN2023/134412
(87) International publication number: WO 2025/000866

(57) **Abstract**

Embodiments of the present application disclose a lithium-ion battery, a preparation method therefor, and an electric device. The lithium-ion battery includes a cathode plate, where a cathode active material layer of the cathode plate includes a lithiophilic metal; and an electrolyte solution, including a metal ion, where a reduction potential of the metal ion is higher than a reduction potential of a lithium ion. The lithiophilic metal and the metal ion in the lithium-ion battery can achieve sustained suppression of lithium dendrites during a long cycle, thereby effectively improving the cycle performance of the lithium-ion battery and prolonging the service life of the lithium-ion battery.

## Description

### CROSS-REFERENCE TO RELATED APPLICATIONS

This patent document claims priority to and the benefit of Chinese Patent Application No. 202310791379.1 filed on Jun. 30, 2023 and entitled "Lithium-ion Battery and Preparation Method Thereof, and Electric Device". The entire content of the above patent application is incorporated by reference into a part of the disclosure of this patent document.

### TECHNICAL FIELD

The present application relates to the technical field of batteries, and in particular, to a lithium-ion battery and a preparation method therefor, and an electric device.

### BACKGROUND

Recently, lithium-ion batteries are widely applied in energy storage power systems, such as hydraulic, thermal, wind, or solar power plants, and the like, and the fields of electric tools, electric bicycles, electric motorcycles, electric vehicles, military equipment, aerospace, or the like, so that lithium-ion batteries are developed greatly.

Lithium dendrites are one of the factors that affect the performance of lithium-ion batteries. The growth of the lithium dendrites may lead to a decrease in the coulombic efficiency of the battery, a deterioration in the cycle performance, and in severe cases, the lithium dendrites may puncture the separator to cause a short circuit in the battery. Therefore, how to suppress the growth of the lithium dendrites is an urgent technical problem to be solved.

### SUMMARY

The present application has been carried out in view of the above problem, and an objective thereof is to provide a lithium-ion battery and a preparation method, and an electric device. The lithium-ion battery has a cathode plate and an electrolyte solution designed to effectively improve lithium evolution during battery cycling, thereby inhibiting lithium dendrites.

A first aspect provides a lithium-ion battery, including a cathode plate, where a cathode active material layer of the cathode plate includes a lithiophilic metal; and an electrolyte solution, including a metal ion, where a reduction potential of the metal ion is higher than a reduction potential of a lithium ion.

It should be understood that the lithiophilic metal is a metal element capable of forming an alloy with lithium.

In the embodiments of the present application, the cathode plate of the lithium-ion battery has the lithiophilic metal, and the electrolyte solution has the metal ion. The lithiophilic metal can form a lithium-metal alloy with lithium when lithium evolution occurs in the cathode, the reduction potential of the metal corresponding to the metal ion is higher than the reduction potential of lithium, and the metal ion can be reduced by lithium to the metal element when lithium evolution occurs in the cathode to consume the precipitated lithium. Thus, the problem of lithium evolution during cycling of the lithium-ion battery can be effectively improved through the cathode plate containing the lithiophilic metal and the electrolyte solution containing the metal ion, so that the generation and/or growth of the lithium dendrites is suppressed. Furthermore, by means of the joint action of the lithiophilic metal and the metal ion, the lithium dendrites can be continuously suppressed during long cycling of the lithium-ion battery, thereby contributing to improving the cycle performance of the lithium-ion battery and prolonging the service life thereof.

In one possible embodiment, the lithiophilic metal is located on a surface of the cathode active material layer close to the electrolyte solution.

Lithium evolution usually occurs on the surface of the cathode active material layer. According to the embodiments of the present application, the lithiophilic metal is disposed on the surface of the cathode active material layer close to the electrolyte solution, so that the precipitated lithium is consumed in time when the lithium evolution occurs in the cathode, thereby more effectively improving the lithium evolution and suppressing the lithium dendrites.

In a possible embodiment, the lithiophilic metal includes at least one of Mg, Sn, Ag, Al, In, Zn, Ca, Sr, Ba, Sc, Y, Rh, Ir, Pd, Pt, Au, Cd, Ga, Ge, Pb, Sb, and Bi.

In one possible embodiment, a content w1 of the lithiophilic metal in the cathode plate satisfies: 100 ppm≤w1≤1000 ppm.

The content of the lithiophilic metal in the cathode plate influences both the effect of suppressing the lithium dendrites and the impedance of the battery. In the embodiments of the present application, the content of the lithiophilic metal is controlled within an appropriate range, which contributes to improving the impedance of the lithium-ion battery while suppressing the lithium dendrites.

In a possible embodiment, the lithiophilic metal includes a single atom and/or particles, and a size d of the particles satisfies: 0 nm<d≤3 nm.

In the case where the lithiophilic metal is contained in the anode active material layer, the lithiophilic metal has a certain influence on the physicochemical properties of an SEI film formed on the surface of the anode active material layer. In the embodiments of the present application, the particle size of the lithiophilic metal is controlled within an appropriate range, which can reduce the possibility of excessive self-discharge of the lithium-ion battery due to the failure of the SEI film to be insulated, thereby helping to prolong the service life of the lithium-ion battery.

In a possible embodiment, the SEI film of the cathode plate includes at least one of a fluoride and a carbonate of the lithiophilic metal.

In one possible embodiment, the metal ion includes at least one of Mg²⁺, Sn⁴⁺, Ag⁺, Al³⁺, In³⁺ Zn²⁺, Ca²⁺, Sr²⁺, Ba²⁺, Sc⁺, Y³⁺, Rh³⁺, Ir³⁺, Pd³⁺, Pt³⁺, Au²⁺, Cd²⁺, Ga³⁺, Ge⁴⁺, Pb⁴⁺, Sb³⁺, and Bi³⁺.

In a possible embodiment, a content w2 of the metal ion in the electrolyte solution satisfies: 500 ppm≤w2≤50000 ppm, and optionally, 2000 ppm≤w2≤20000 ppm.

The content of the metal ion in the electrolyte solution influences both the effect of suppressing lithium dendrites and the impedance of the electrolyte solution. In the embodiments of the present application, the content of the metal ion in the electrolyte solution is controlled within an appropriate range, which contributes to improving the impedance of the lithium-ion battery while suppressing the lithium dendrites.

In a possible embodiment, the electrolyte solution includes an inorganic salt, and the inorganic salt includes the metal ion and anion; and the anion includes at least one of an acetate anion, a nitrate anion, a hexafluorophosphate anion, a perchlorate anion, and a bis (trifluoromethanesulfonyl) amine anion.

In a possible embodiment, the lithiophilic metal is obtained by a chemical reaction.

In a possible embodiment, the chemical reaction includes atomic layer deposition, liquid phase deposition, and solid phase deposition.

In a possible embodiment, the lithiophilic metal is obtained by an electrochemical reaction.

A second aspect provides a lithium-ion battery, including a cathode plate, where a cathode active material layer of the cathode plate includes a lithium-metal alloy; and an electrolyte solution, including metal ion, where a reduction potential of the metal ion is higher than a reduction potential of a lithium ion.

In a possible embodiment, the cathode active material layer includes a lithiophilic metal, and the lithium-metal alloy includes an alloy formed by lithium and the lithiophilic metal.

In a possible embodiment, the lithium-metal alloy further includes an alloy formed by lithium and a metal obtained by reducing the metal ion.

In a possible embodiment, the lithium-metal alloy is located on a surface of the cathode active material layer close to the electrolyte solution.

In a possible embodiment, a content w3 of the lithiophilic metal in the cathode plate satisfies: 100 ppm≤w3≤3000 ppm.

In a possible embodiment, the metal in the lithium-metal alloy includes at least one of Mg, Sn, Ag, Al, In, Zn, Ca, Sr, Ba, Sc, Y, Rh, Ir, Pd, Pt, Au, Cd, Ga, Ge, Pb, Sb, and Bi.

In one possible embodiment, the metal ion includes at least one of Mg²⁺, Sn⁴⁺, Ag⁺, Al³⁺, In³⁺ Zn²⁺, Ca²⁺, Sr²⁺, Ba²⁺, Sc⁺, Y³⁺, Rh³⁺, Ir³⁺, Pd³⁺, Pt³⁺, Au²⁺, Cd²⁺, Ga³⁺, Ge⁴⁺, Pb⁴⁺, Sb³⁺, and Bi³⁺.

In a possible embodiment, a content w4 of the metal ion in the electrolyte satisfies: 100 ppm≤w4≤48000 ppm, and optionally, 300 ppm≤w4≤19000 ppm.

A third aspect provides a method for preparing a lithium-ion battery, including: preparing a lithiophilic metal in an anode active material layer of an anode plate; adding metal ion into an electrolyte solution, where a reduction potential of the metal ion is higher than a reduction potential of lithium ion; and assembling the anode plate and the electrolyte solution into the lithium-ion battery.

In a possible embodiment, the preparing the lithiophilic metal in the cathode active material layer of the cathode plate includes: preparing the lithiophilic metal on a surface of the cathode active material layer close to the electrolyte solution.

In a possible embodiment, the preparing the lithiophilic metal in the cathode active material layer of the cathode plate includes: preparing the lithiophilic metal through a chemical reaction.

In a possible embodiment, the chemical reaction includes atomic layer deposition, liquid phase deposition, and solid phase deposition.

In a possible embodiment, the preparing the lithiophilic metal in the cathode active material layer of the cathode plate includes: preparing the lithiophilic metal through an electrochemical reaction.

In a possible embodiment, the electrochemical reaction includes: reducing the metal ion at a reduction potential of the metal ion to obtain the lithiophilic metal.

In a possible embodiment, the SEI film of the cathode plate includes at least one of a fluoride and a carbonate of the lithiophilic metal.

In a possible embodiment, the adding the metal ion into the electrolyte solution includes: adding an inorganic salt into the electrolyte solution, where the inorganic salt includes the metal ion and an anion, and the anion includes at least one of an acetate anion, a nitrate anion, a hexafluorophosphate anion, a perchlorate anion, and a bis (trifluoromethanesulfonyl) amine anion.

In a possible embodiment, the lithiophilic metal includes at least one of Mg, Sn, Ag, Al, In, Zn, Ca, Sr, Ba, Sc, Y, Rh, Ir, Pd, Pt, Au, Cd, Ga, Ge, Pb, Sb, and Bi.

In one possible embodiment, the metal ion includes at least one of Mg²⁺, Sn⁴⁺, Ag⁺, Al³⁺, In³⁺ Zn²⁺, Ca²⁺, Sr²⁺, Ba²⁺, Sc⁺, Y³⁺, Rh³⁺, Ir³⁺, Pd³⁺, Pt³⁺, Au²⁺, Cd²⁺, Ga³⁺, Ge⁴⁺, Pb⁴⁺, Sb³⁺, and Bi³⁺.

A fourth aspect provides an electric device, including at least one of the lithium-ion battery in any possible embodiment of the first aspect, the lithium-ion battery in any possible embodiment of the second aspect, and the lithium-ion battery prepared by the method in any possible embodiment of the third aspect.

### DESCRIPTION OF DRAWINGS

In order to more clearly illustrate the technical solutions of the embodiments of the present application, the drawings required to be used in the embodiments of the present application will be briefly introduced below. Obviously, the drawings described below are only some embodiments of the present application. For persons of ordinary skill in the art, other drawings can also be obtained from the drawings without creative work.
FIG. 1 is a schematic flowchart of a method for preparing a lithium-ion battery.
FIG. 2 is a schematic diagram of a battery cell.
FIG. 3 is a schematic diagram of a battery module.
FIG. 4 is a schematic diagram of a battery.
FIG. 5 is another schematic diagram of a battery.

### DESCRIPTION OF EMBODIMENTS

Embodiments where a lithium-ion battery and a preparation method therefor, and an electric device provided by the present application are specifically disclosed are described in detail appropriately with reference to the drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit subject matters described in the claims.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

In the description of the present application, it should be noted that, unless otherwise specified, "a plurality of" means two or more, and orientations or positional relationships indicated by the terms "upper", "lower", "left", "right", "inner", "outer", and the like are merely for convenience of description of the present application and simplicity of description, and do not indicate or imply that an apparatus or a component to be referred to must have a specific orientation, or be constructed and operated in a specific orientation, and therefore should not be understood as a limitation on the present application. In addition, the terms "first", "second", "third", and the like are used merely for description purposes, and should not be understood as an indication or implication of relative importance.

Unless otherwise specified, in the present application, the phrase "A and/or B" means "A, B, or both A and B". More specifically, the condition "A or B" is satisfied by either A being true (or present) and B being false (or absent), A being false (or absent) and B being true (or present), or both A and B being true (or present).

Unless otherwise specified, all steps in this application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

Unless otherwise specified, all embodiments and optional embodiments of this application may be combined with each other to form new technical solutions.

Unless otherwise specified, the following terms have the following meanings. Any undefined terms have their technically known meanings.

As referred to, the "lithiophilic metal" refers to a metal element capable of forming a lithium-metal alloy with lithium, such as magnesium, zinc, aluminum, and the like.

As referred to, the "lithium dendrites" refers to dendritic metallic lithium formed when the lithium ion is reduced during cycling of the lithium-ion battery.

As referred to, the "SEI film" refers to a solid electrolyte interface (SEI) film. The SEI film is a passivation film formed on the surface of the cathode by the lithium ion and some components in the electrolyte solution during charging of the lithium-ion battery.

As referred to, the "particle" refers to a nanoscale particle formed by the agglomeration of a plurality of atoms or molecules.

Next, an embodiment of the present application will be described.

In recent years, secondary batteries have been widely used in various fields such as electric tools, electronic products, electric vehicles, and aerospace due to their high energy density and long service life, and thus have been developed rapidly. Generally, the secondary battery includes a anode plate, a cathode plate, an electrolyte solution, and a separator. During charging and discharging of the battery, an active ion is intercalated and deintercalated back and forth between the anode plate and the cathode plate. The electrolyte solution mainly functions to conduct active ions between the anode plate and the cathode plate. The separator is disposed between the anode plate and the cathode plate to allow the active ions to pass therethrough while preventing the anode and cathode from being short-circuited, so that the electrochemical reaction of the secondary cell is performed normally.

Taking a lithium-ion battery as an example, the lithium-ion battery is a typical secondary battery, and since it is charged and discharged by means of the chemical reaction in which a lithium ion is deintercalated between the anode and cathode, the lithium-ion battery is called a rocking chair battery. During charging of the lithium-ion battery, the lithium ion is deintercalated from the anode active material, move to the cathode through conduction of the electrolyte solution and is inserted into the cathode active material, and during discharging, the lithium ion is deintercalated from the cathode active material, move to the anode through conduction of the electrolyte solution and are inserted into the anode active material.

It should be understood that the processes of "lithium intercalation" and "intercalation" described herein refer to a process in which the lithium ion is intercalated into a cathode active material or an anode active material due to an electrochemical reaction, and the processes of "deintercalation", "lithium deintercalation" and "deintercalation" described herein refer to a process in which the lithium ion is deintercalated into a cathode active material or an anode active material due to an electrochemical reaction.

During charging and discharging of the lithium-ion battery, factors such as a change in the internal resistance of the lithium-ion battery, a balance between the rate of the electrochemical reaction of the anode and cathode and the rate of the movement of electrons, and the rate of diffusion of the lithium ion involved in the electrochemical reaction all cause polarization of the battery, so that the lithium ion is precipitated from the surface of the cathode active material layer, i.e., lithium evolution occurs. With further deposition of the lithium ion, formation and growth of the lithium dendrites may result. The formation and growth of the lithium dendrites continuously consume the lithium ion, resulting in a decrease in the capacity and cycle life of the battery, and in severe cases, the lithium dendrites may also pierce the separator, resulting in a short-circuit between the anode and cathode, causing safety problems in the battery.

In view of this, embodiments of the present application provide a lithium-ion battery and a preparation method therefor, and an electric device, where the lithium-ion battery has a cathode plate including a lithiophilic metal and an electrolyte solution including metal ion. Both the lithiophilic metal and the metal ion can improve lithium evolution during cycling of the lithium-ion battery, so as to suppress the formation of the lithium dendrites, thereby suppressing the lithium dendrites during long cycling of the lithium-ion battery.

Generally, the lithium-ion battery includes an anode plate, a cathode plate, an electrolyte solution, and a separator. Next, the lithium-ion battery provided by the present application and each part of the lithium-ion battery will be described.

First, provided is a lithium-ion battery, including a cathode plate and an electrolyte solution. The cathode active material layer of the cathode plate includes a lithiophilic metal, and the electrolyte solution includes metal ion, where a reduction potential of the metal ion is higher than a reduction potential of a lithium ion.

Specifically, in the case where lithium evolution occurs on the surface of the cathode active material layer during cycling of the lithium-ion battery, the lithiophilic metal in the cathode active material layer may react with the evolved lithium to form a lithium-metal alloy, primarily inhibiting lithium evolution. During large current cycling or long cycling of a lithium-ion battery, the inhibition effect of the lithiophilic metal in the anode active material layer is limited, and the lithium dendrites may continue to grow to pierce the SEI film. Since the reduction potential of the metal ion in the electrolyte solution is higher than the reduction potential of the lithium ion, the metal ion is reduced to a metal element by the precipitated lithium to consume the precipitated lithium. As a result, lithium dendrites are persistently suppressed during long cycling of the lithium-ion battery.

It should be understood that the elements of the lithiophilic metal and the metal ion may be the same or different.

This embodiment can effectively inhibit the formation and/or growth of the lithium dendrites by introducing the lithiophilic metal into the anode active material layer of the lithium-ion battery while introducing the metal ion into the electrolyte solution, thereby improving the safety performance of the battery and prolonging the service life thereof during long cycling of the battery.

In an embodiment, the lithiophilic metal is located on a surface of the cathode active material layer close to the electrolyte solution.

Specifically, lithium evolution usually occurs on the surface of the cathode active material layer. In this embodiment, the lithiophilic metal is introduced on the surface of the cathode active material layer close to the electrolyte solution, which contributes to reaction of the lithiophilic metal with the precipitated lithium timely to form a lithium-metal alloy, thereby helping to improve the effect of the lithiophilic metal on suppressing lithium deposition.

Illustratively, in the process of preparing the anode active material layer including the lithiophilic metal, the content of the lithiophilic metal on the surface of the cathode active material layer may be controlled to be higher than the content of the lithiophilic metal at the portion of the cathode active material layer close to the current collector.

In an embodiment, the lithiophilic metal includes at least one of Mg, Sn, Ag, Al, In, Zn, Ca, Sr, Ba, Sc, Y, Rh, Ir, Pd, Pt, Au, Cd, Ga, Ge, Pb, Sb, and Bi.

In an embodiment, a content w1 of the lithiophilic metal in the cathode plate satisfies: 100 ppm≤w1≤1000 ppm.

Specifically, w1 may be 100 ppm, 200 ppm, 300 ppm, 400 ppm, 500 ppm, 600 ppm, 700 ppm, 800 ppm, 900 ppm, 1000 ppm, or a numerical range thereof obtained by a combination of any two of the above.

On the one hand, if the content of the lithiophilic metal is too low, the inhibition effect of the lithiophilic metal on the lithium evolution is limited, so that local lithium evolution may occur in the cathode active material layer. On the other hand, if the content of the lithiophilic metal is too high, the lithiophilic metal covers the surface of the cathode active material layer too much, and more alloys are formed, so that the impedance of the lithium-ion battery is increased, and the lithiophilic metal cannot contribute to the capacity of the lithium-ion battery, which is disadvantageous in improving the energy density of the lithium-ion battery. In a possible embodiment, the lithiophilic metal is prepared by an electrochemical reaction, specifically, the lithiophilic metal may be prepared by electrochemically reducing the metal ion in an electrolyte solution. During the electrochemical reduction, illustratively, the content of the lithiophilic metal in the cathode active material layer may be controlled by controlling the concentration of the metal ion in the electrolyte solution.

Thus, in this embodiment, the content w1 of the lithiophilic metal in the cathode plate is controlled within an appropriate range, which can reduce the influence of the lithiophilic metal on the impedance of the lithium-ion battery while effectively suppressing the lithium evolution.

In an embodiment, the lithiophilic metal includes a single atom and/or particles, and a particle size d satisfies: 0 nm<d≤3 nm.

Specifically, d may be 0.1 nm, 0.2 nm, 0.3 nm, 0.4 nm, 0.5 nm, 0.6 nm, 0.7 nm, 0.8 nm, 0.9 nm, 1 nm, 1.1 nm, 1.2 nm, 1.3 nm, 1.4 nm, 1.5 nm, 1.6 nm, 1.7 nm, 1.8 nm, 1.9 nm, 2.0 nm, 2.1 nm, 2.2 nm, 2.3 nm, 2.4 nm, 2.5 nm, 2.6 nm, 2.7 nm, 2.8 nm, 2.9 nm, 3.0 nm, or a range of values within a combination of any two of the above values.

Since the lithiophilic metal has conductivity, if the size of the lithiophilic metal is too large, the insulation property of the SEI film on the surface of the cathode active material layer may decrease, which may increase the self-discharge of the lithium-ion battery, thereby affecting the capacity and the service life of the lithium-ion battery. In a possible embodiment, the lithiophilic metal is prepared by an electrochemical reaction, and during the electrochemical reduction, the particle size of the lithiophilic metal may be controlled, for example, by controlling the time of the electrochemical reaction.

In this embodiment, the size of the lithiophilic metal is controlled within a small range, which can reduce the influence on the insulation of the SEI film formed on the surface of the cathode active material layer after the introduction of the lithiophilic metal into the cathode active material layer, thereby helping to reduce the self-discharge of the lithium-ion battery.

The lithiophilic metal including a single atom may be understood to mean that the morphology of the lithiophilic metal is a single metal atom. The lithiophilic metal including particles may be understood to mean that the morphology of the lithiophilic metal is an agglomeration of a plurality of metal atoms.

In an embodiment, the SEI film of the cathode plate includes at least one of a fluoride, a carbonate of a lithiophilic metal.

In an embodiment, the metal ion includes at least one of Mg²⁺, Sn⁴⁺, Ag⁺, Al³⁺, In³⁺, Zn²⁺, Ca²⁺, Sr²⁺, Ba²⁺, Sc⁺, Y³⁺, Rh³⁺, Ir³⁺, Pd³⁺, Pt³⁺, Au²⁺, Cd²⁺, Ga³⁺, Ge⁴⁺, Pb⁴⁺, Sb³⁺, and Bi³⁺.

Specifically, in the case that a large amount of the lithiophilic metal in the cathode plate is consumed during long cycling of the lithium-ion battery and lithium evolution cannot be continuously suppressed, all the above metal ions may be reduced by lithium to form the metal element, and the metal element has a lithiophilic property and can continuously form a lithium-metal alloy with lithium, and the lithium-metal alloy can further induce uniform deposition of lithium on the cathode plate and control the morphology of the surface of the cathode plate to suppress the growth of the lithium dendrites, which contributes to improving the cycle performance of the lithium-ion battery and prolonging the service life thereof during long cycling.

In another embodiment, after the metal ion is reduced by lithium to the metal element, the metal element may also be non-lithiophilic, in other words, the metal element may not form the lithium-metal alloy with lithium.

In an embodiment, a content w2 of the metal ion in the electrolyte solution satisfies: 500 ppm≤w2≤50000 ppm, and optionally, 2000 ppm≤w2≤20000 ppm.

Specifically, w2 may be 500 ppm, 1000 ppm, 1500 ppm, 2000 ppm, 2500 ppm, 3000 ppm, 3500 ppm, 4000 ppm, 4500 ppm, 5000 ppm, 5500 ppm, 6000 ppm, 6500 ppm, 7000 ppm, 7500 ppm, 8000 ppm, 8500 ppm, 9000 ppm, 9500 ppm, 10000 ppm, 15000 ppm, 20000 ppm, 25000 ppm, 30000 ppm, 35000 ppm, 40000 ppm, 45000 ppm, 50000 ppm, or a range of values within a combination of any two of the above.

On the one hand, if the content of the metal ion in the electrolyte solution is too small, the suppression effect on lithium evolution is limited, and on the other hand, if the content of the metal ion in the electrolyte solution is too large, the viscosity of the electrolyte solution becomes too high and the impedance of the lithium-ion battery increases.

In this embodiment, the content of the metal ion in the electrolyte solution is controlled within an appropriate range, which contributes to reducing the influence of the metal ion on the impedance of the lithium-ion battery while suppressing the lithium dendrites.

In an embodiment, the electrolyte solution includes an inorganic salt, and the inorganic salt includes the metal ion and an anion; and the anion includes at least one of an acetate anion, a nitrate anion, a hexafluorophosphate anion, a perchlorate anion, and a bis (trifluoromethanesulfonyl) amine anion.

In an embodiment, the lithiophilic metal is obtained by a chemical reaction.

In an embodiment, the chemical reaction includes atomic layer deposition (ALD), liquid phase deposition (LPD), and solid precipitation (SP).

In an embodiment, the lithiophilic metal is obtained by an electrochemical reaction.

In the above embodiments, the lithium-ion battery capable of suppressing the lithium dendrites for a long period of time is described. Next, the above lithium-ion battery after cycling is introduced.

Embodiments of the present application further provide a lithium-ion battery after cycling, including a cathode plate and an electrolyte solution. The cathode active material layer of the cathode plate includes a lithium-metal alloy, and the electrolyte solution includes a metal ion, where a reduction potential of the metal ion is higher than a reduction potential of a lithium ion.

It should be understood that in the embodiments of the present application, the lithium-ion battery after cycling may be regarded as a lithium-ion battery in which a phenomenon of lithium evolution has occurred, that is, a lithium-ion battery after lithium evolution. It has been mentioned in the foregoing embodiment that the cathode plate of the lithium-ion battery includes the lithiophilic metal and the electrolyte solution includes the metal ion. Accordingly, the surface of the cathode active material layer of the lithium-ion battery after cycling precipitates lithium, and the precipitated lithium is consumed by the lithiophilic metal and/or the metal ion, so that the cathode active material layer of the lithium-ion battery after cycling includes the lithium-metal alloy.

In an embodiment, the cathode active material layer includes a lithiophilic metal and the lithium-metal alloy includes an alloy of lithium and the lithiophilic metal.

Specifically, in the case where the surface of the cathode active material layer has just started to precipitate lithium, the precipitated lithium may react with the lithiophilic metal in the cathode active material layer to form the lithium-metal alloy. Thus, the cathode active material layer of the lithium-ion battery after cycling includes the lithium-metal alloy formed by the lithiophilic metal and the precipitated lithium.

In an embodiment, the lithium-metal alloy further includes an alloy formed by lithium and a metal obtained by reducing the metal ion.

For example, during long cycling of the lithium-ion battery, the content of the lithiophilic metal in the cathode active material layer is limited, and when the lithiophilic metal in the cathode active material layer has failed to improve lithium evolution and inhibit the growth of the lithium dendrites, the lithium dendrites may continue to grow. In the case where the lithium dendrites pierce the SEI film on the surface of the cathode active material layer, the free metal ion in the electrolyte solution may diffuse to the lithium dendrites to be reduced by lithium to the metal element, thereby reacting with lithium to form the lithium-metal alloy. Thus, the cathode active material layer of the lithium-ion battery after cycling may further include the lithium-metal alloy formed by the metal obtained by reducing the metal ion and lithium. In other words, the metal element obtained by reducing the metal ion in the electrolyte solution may also participate in the formation of the lithium-metal alloy.

It should be understood that in the case where the lithiophilic metal and the metal ion have the same element, the lithium-metal alloy in the cathode active material layer after cycling may be a single component alloy. Illustratively, the lithiophilic metal is zinc (Zn), the metal ion is a zinc ion (Zn²⁺), and the component of the lithium-metal alloy is a lithium-zinc alloy. In the case where the elements of the lithiophilic metal and the metal ion are different, the lithium-metal alloy in the cathode active material layer after cycling may be a multi-component alloy. Illustratively, the lithiophilic metal is zinc (Zn), the metal ion is a magnesium ion (Mg²⁺), and the component of the lithium-metal alloy may include both a lithium-zinc alloy and a lithium-magnesium alloy.

In an embodiment, the lithium-metal alloy is located on a surface of the cathode active material layer close to the electrolyte solution.

Specifically, in the case where the lithiophilic metal is located on the surface of the cathode active material layer, in the lithium-ion battery after cycling, the lithium-metal alloy is also located on the surface of the cathode active material layer close to the electrolyte solution.

In an embodiment, a content w3 of the lithiophilic metal in the cathode plate satisfies: 100 ppm≤w3≤3000 ppm.

Specifically, w3 may be 100 ppm, 200 ppm, 300 ppm, 400 ppm, 500 ppm, 600 ppm, 700 ppm, 800 ppm, 900 ppm, 1000 ppm, 1200 ppm, 1400 ppm, 1600 ppm, 1800 ppm, 2000 ppm, 2200 ppm, 2400 ppm, 2600 ppm, 2800 ppm, 3000 ppm, or a range of values within a combination of any two of the above.

In an embodiment, the metal in the lithium-metal alloy includes at least one of Mg, Sn, Ag, Al, In, Zn, Ca, Sr, Ba, Sc, Y, Rh, Ir, Pd, Pt, Au, Cd, Ga, Ge, Pb, Sb, and Bi.

In an embodiment, the metal ion includes at least one of Mg²⁺, Sn⁴⁺, Ag⁺, Al³⁺, In³⁺, Zn²⁺, Ca²⁺, Sr²⁺, Ba²⁺, Sc⁺, Y³⁺, Rh³⁺, Ir³⁺, Pd³⁺, Pt³⁺, Au²⁺, Cd²⁺, Ga³⁺, Ge⁴⁺, Pb⁴⁺, Sb³⁺, and Bi³⁺.

In an embodiment, a content w4 of the metal ion in the electrolyte solution satisfies: 100 ppm≤w4≤48000 ppm, and optionally 300 ppm≤w4≤19000 ppm.

As the number of cycles of the lithium-ion battery increases, the content of the metal ion in the electrolyte solution will gradually decrease. Exemplarily, the content w4 of the metal ion in the electrolyte solution at the beginning of the lithium evolution of the lithium ion satisfies: 400 ppm≤w4≤48000 ppm, and optionally 1800 ppm≤w4≤19000 ppm. As the metal ion is gradually consumed by the lithium dendrites, the content w4 of the metal ion in the electrolyte solution satisfies: 100 ppm≤w4≤42000 ppm, and optionally, 300 ppm≤w4≤14000 ppm.

Specifically, W4 may be 100 ppm, 200 ppm, 300 ppm, 400 ppm, 500 ppm, 600 ppm, 700 ppm, 800 ppm, 900 ppm, 1000 ppm, 2000 ppm, 3000 ppm, 4000 ppm, 5000 ppm, 6000 ppm, 7000 ppm, 8000 ppm, 9000 ppm, 10000 ppm, 11000 ppm, 12000 ppm, 13000 ppm, 14000 ppm, 15000 ppm, 16000 ppm, 17000 ppm, 18000 ppm, 19000 ppm, 20000 ppm, 22000 ppm, 24000 ppm, 26000 ppm, 28000 ppm, 30000 ppm, 32000 ppm, 34000 ppm, 36000 ppm, 38000 ppm, 40000 ppm, 42000 ppm, 44000 ppm, 46000 ppm, 48000 ppm, or a numerical range thereof obtained by a combination of any two of the above.

Next, the anode plate, the cathode plate, the separator, and the electrolyte solution in the lithium-ion battery will be described in detail.

### [Cathode plate]

The cathode plate usually includes a cathode current collector and a cathode film layer disposed on at least one surface of the cathode current collector, the cathode film layer including a cathode active material and a lithiophilic metal.

As an example, the cathode current collector has two surfaces opposite in its own thickness direction, and the cathode active material is disposed on either one or both of the two opposite surfaces of the cathode current collector. The cathode active material layer disposed on the surface of the cathode current collector also has two opposing surfaces in the thickness direction thereof, and one of the surfaces is in contact with the cathode current collector and the other surface is away from the cathode current collector in the thickness direction of the cathode active material layer. The "surface of the cathode active material layer close to the electrolyte solution" referred to in the embodiments of the present application is a surface of the cathode active material layer away from the cathode current collector.

In an embodiment, the cathode current collector may be a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In an embodiment, the cathode active material may be a cathode active material for a battery well-known in the art. As an example, the cathode active material may include at least one of the following: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, this application is not limited to these materials, and another conventional material that can be used as a negative electrode active material of a battery may also be used. These negative electrode active materials may be used alone or in combination of two or more thereof.

In an embodiment, the lithiophilic metal may be a metal capable of forming an alloy with lithium known in the art. As an example, the lithiophilic metal may be selected from at least one of Mg, Sn, Ag, Al, In, Zn, Ca, Sr, Ba, Sc, Y, Rh, Ir, Pd, Pt, Au, Cd, Ga, Ge, Pb, Sb, and Bi.

In an embodiment, a content w1 of the lithiophilic metal in the cathode active material layer satisfies: 100 ppm≤w1≤1000 ppm.

In an embodiment, the lithiophilic metal includes a single atom and/or particles, and a particle size d satisfies: 0 nm<d≤3 nm.

In an embodiments, the cathode active material further includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In an embodiment, the cathode active material further includes a conductive agent. The conductive agent may be selected from at least one of superconducting carbon, acetylene black, carbon black, Ketjen black, carbon dots, carbon nanotubes, graphene, and carbon nanofibers.

In an embodiment, the cathode active material layer further includes another auxiliary agent, for example, a thickening agent (e.g., sodium carboxymethyl cellulose (CMC-Na)).

In an embodiment, the cathode plate may be prepared by forming the components described above for preparing the cathode plate into a cathode slurry. For example, the cathode active material, the conductive agent, the binder, and any other components are dispersed in a solvent such as N-methylpyrrolidone to form a cathode slurry. Then, the cathode slurry is coated on a cathode current collector, followed by steps such as drying and rolling to obtain a cathode plate.

### [Anode plate]

The anode plate includes an anode current collector and an anode active material layer disposed on at least one surface of the anode current collector.

As an example, the anode current collector has two surfaces opposite in its own thickness direction, and the anode active material is provided on either one or both of the two opposite surfaces of the anode current collector.

In an embodiment, the anode current collector may be a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

In an embodiment, the anode active material may be an anode active material for a battery known in the art. As an example, the positive electrode active material may include at least one of olivine-structured lithium-containing phosphate, lithium-transition metal oxide, and their respective modifying compounds. However, the present application is not limited to these materials, and other conventional materials that can be used as a positive electrode active material of a battery may also be used. These positive electrode active materials may be used alone or in combination of two or more thereof. Examples of the lithium transition metal oxide may include, but are not limited to, at least one of lithium cobalt oxide (e.g., LiCoO₂), lithium nickel oxide (for example, LiNiO₂), lithium manganese oxide (e.g., LiMnO₂, LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (may also be referred to as NCM333), LiNi_{0.5}Co_{0.2}Mn_{0.3}O₂ (may also be referred to as NCM523), LiNi_{0.5}Co_{0.25}Mn_{0.25}O₂ (may also be referred to as NCM211), LiNi_{0.6}Co_{0.2}Mn_{0.2}O₂ (may also be referred to as NCM622), LiNi_{0.8}Co_{0.1}Mn_{0.1}O₂ (may also be referred to as NCM811)), lithium nickel cobalt aluminum oxide (e.g., LiNi_{0.85}Co_{0.15}Al_{0.05}O₂), modifying compounds thereof, and the like. Examples of the olivine-structured lithium-containing phosphate may include, but are not limited to, at least one of lithium iron phosphate (e.g., LiFePO₄ (which may also be simply referred to as LFP)), a composite of lithium iron phosphate and carbon, lithium manganese phosphate (e.g., LiMnPO₄), a composite material of lithium manganese phosphate and carbon, lithium ferro-manganese phosphate, and a composite material of lithium ferro-manganese phosphate and carbon. Deintercalation and consumption of Li occur during charging and discharging of the battery, and the molar content of Li varies when the battery is discharged to different states. In the enumeration of the anode active material in the present application, the molar content of Li is an initial state of the material, i.e., a state before adding. The anode active material is applied to a battery system, and the molar content of Li changes after charging and discharging cycles. In the enumeration of the anode electrode material in the present application, the molar content of O is only a theoretical state value, the molar content of O changes due to the release of oxygen from a lattice, and the actual molar content of O fluctuates.

In an embodiment, the anode active material layer further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In an embodiment, the anode active material layer further includes a conductive agent. As an example, the conductive agent may include at least one of superconducting carbon, acetylene black, carbon black, ketjen black, carbon dots, carbon nanotubes, graphene, and carbon nanofibers.

In an example, the anode plate may be prepared by separately forming the components described above for preparing the anode plate into an anode slurry. For example, the anode active material, the conductive agent, the binder, and any other components are dispersed in a solvent such as N-methylpyrrolidone to form an anode slurry. Then, the anode electrode slurry is coated on an anode current collector, followed by steps such as drying and rolling to obtain an anode plate.

### [Electrolyte solution]

The electrolyte solution functions to conduct ions between the anode plate and the cathode plate. The type of the electrolyte solution is not specifically limited in the present application, and may be selected according to a requirement. The electrolyte solution includes an electrolyte salt, a solvent, and a metal ion.

In an embodiment, the electrolyte salt may be selected from at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In an embodiment, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In an embodiment, the metal ion is provided by an inorganic salt. In other words, the electrolyte solution includes an inorganic salt, and the inorganic salt includes the metal ion and an anion. The metal ion includes at least one of Mg²⁺, Sn⁴⁺, Ag⁺, Al³⁺, In³⁺, Zn²⁺, Ca²⁺, Sr²⁺, Ba²⁺, Sc⁺, Y³⁺, Rh³⁺, Ir³⁺, Pd³⁺, Pt³⁺, Au²⁺, Cd²⁺, Ga³⁺, Ge⁴⁺, Pb⁴⁺, Sb³⁺, and Bi³⁺. The anion includes at least one of an acetate anion, a nitrate anion, a hexafluorophosphate anion, a perchlorate anion, and a bis(trifluoromethanesulfonyl)amine anion.

In an embodiment, the electrolyte solution may further include an additive. The additive may include a cathode film-forming additive, an anode film-forming additive, and may further include an additive capable of improving specific performance of the battery, for example, an additive improving overcharge performance of the battery, an additive improving high-temperature or low-temperature performance of the battery, and the like.

### [Separator]

In an embodiment, the battery further includes a separator. The type of the separator is not particularly limited in the present application, and any well-known porous separator with good chemical stability and mechanical stability may be used.

In an embodiment, a material of the separator may be selected from at least one of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

### [Preparation Method]

Next, a method for preparing the lithium-ion battery in the foregoing embodiment will be described.

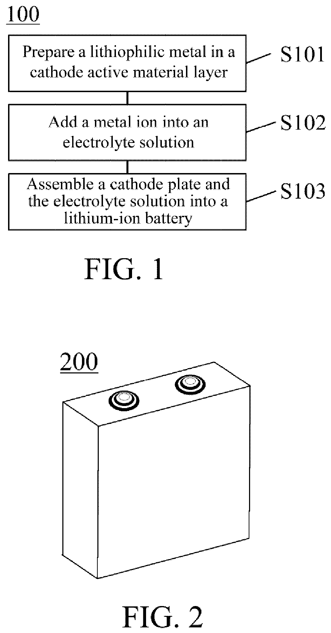

The present application further provides a method for preparing a lithium-ion battery, and FIG. 1 is a schematic flowchart of the method.

As shown in FIG. 1, the method 100 includes:
S101, preparing a lithiophilic metal in a cathode active material layer of a cathode plate.

S102, adding a metal ion into an electrolyte solution, where a reduction potential of the metal ion is higher than a reduction potential of a lithium ion.

S103, assembling the cathode plate and the electrolyte solution into a lithium-ion battery.

In other words, the lithiophilic metal is prepared in the cathode active material layer, the metal ion is added into the electrolyte solution, and the cathode plate including the lithiophilic metal and the electrolyte solution including the metal ion are used to prepare the lithium-ion battery. For example, the cathode plate including the lithiophilic metal, the anode plate, and a separator are wound to form an electrode assembly, the electrode assembly is placed in a case, the electrolyte solution including the metal ion is injected, and then the case is encapsulated to obtain the lithium-ion battery.

It should be understood that in carrying out the method 100, the lithiophilic metal may be prepared in the cathode active material layer first and then the metal ion may be added into the electrolyte solution; or the metal ion may be added into the electrolyte solution and then the lithiophilic metal may be prepared in the cathode active material layer; or the metal ion may be added into the electrolyte solution while the lithiophilic metal is prepared in the cathode active material layer.

Optionally, in S101, the preparing the lithiophilic metal in the cathode active material layer includes: preparing the lithiophilic metal on a surface of the anode active material layer close to the electrolyte solution.

Optionally, in S101, the preparing the lithiophilic metal in the cathode active material layer includes: preparing the lithiophilic metal by a chemical reaction.

Optionally, the chemical reaction includes atomic layer deposition, liquid phase deposition, and solid phase deposition.

For example, by way of atomic layer deposition, the lithiophilic metal may be coated layer by layer to the surface of the cathode active material layer in the form of a single atomic film on the surface of the cathode active material layer. The preparation of the lithiophilic metal with a small particle size is facilitated by atomic layer deposition. For another example, by way of liquid deposition, the cathode active material layer may be placed in a solution, and the lithiophilic metal may be prepared at a position where the cathode active material layer is in contact with the solution by a chemical reaction in the solution. For another example, by way of solid phase deposition, a precursor may be provided in the cathode active material layer, and a reaction of the precursor may be induced at a high temperature to obtain the lithiophilic metal. Optionally, after liquid phase deposition or solid phase deposition, it is also possible to prepare the lithiophilic metal with a smaller particle size by acid washing.

Optionally, in S101, the preparing the lithiophilic metal in the cathode active material layer includes: preparing the lithiophilic metal by an electrochemical reaction.

Optionally, the electrochemical reaction includes: reducing the metal ion at a reduction potential of the metal ion to obtain the lithiophilic metal.

Specifically, an inorganic salt may be directly added into the electrolyte solution, where the inorganic salt includes the metal ion and an anion. The voltage of the lithium-ion battery is adjusted to the reduction potential of the metal ion, so that the metal ion is reduced to the lithiophilic metal on the surface of the cathode active material layer.

It should be understood that the metal ion used for the electrochemical reduction reaction is a metal ion corresponding to the lithiophilic metal, which may be the same as or different from the metal ion in the electrolyte solution of the lithium-ion battery in the foregoing embodiment. In other words, in an embodiment, the lithiophilic metal may be directly obtained by reducing the metal ion in the electrolyte solution.

Optionally, the SEI film of the cathode plate includes at least one of a fluoride and a carbonate of the lithiophilic metal.

The formation process of the SEI film generally occurs at a solid-liquid interface of the cathode active material layer and the electrolyte solution, and therefore, for the lithium-ion battery with the cathode active material layer including the lithiophilic metal, the lithiophilic metal also participates in the formation of the SEI film, and the formed lithiophilic metal includes the lithiophilic metal. In addition, since the inorganic salt is added into the electrolyte solution in the process of preparing the lithiophilic metal by the electrochemical reaction, a part of the inorganic salt may remain in the electrolyte solution after the preparation of the lithiophilic metal. This part of inorganic salt may participate in the formation of the SEI film, such that the SEI film includes at least one of a fluoride and a carbonate of the lithiophilic metal.

Optionally, in S102, the adding the metal ion into the electrolyte solution includes: adding an inorganic salt into the electrolyte solution, where the inorganic salt includes the metal ion and an anion, and the anion includes at least one of an acetate anion, a nitrate anion, a hexafluorophosphate anion, a perchlorate anion, and a bis (trifluoromethanesulfonyl) amine anion.

Optionally, the lithiophilic metal includes at least one of Mg, Sn, Ag, Al, In, Zn, Ca, Sr, Ba, Sc, Y, Rh, Ir, Pd, Pt, Au, Cd, Ga, Ge, Pb, Sb, and Bi.

Optionally, the metal ion includes at least one of Mg²⁺, Sn⁴⁺, Ag⁺, Al³⁺, In³⁺, Zn²⁺, Ca²⁺, Sr²⁺, Ba²⁺, Sc⁺, Y³⁺, Rh³⁺, Ir³⁺, Pd³⁺, Pt³⁺, Au²⁺, Cd²⁺, Ga³⁺, Ge⁴⁺, Pb⁴⁺, Sb³⁺, and Bi³⁺.

Based on a similar principle, the lithium-ion battery in the foregoing embodiment which may be prepared by the method 100 has the cathode plate including the lithiophilic metal and the electrolyte solution including the metal ion and can achieve corresponding technical effects, which are not described repeatedly herein.

In an embodiment, the cathode plate, the anode plate, and the separator may be manufactured into an electrode assembly through a winding process or a lamination process.

In an embodiment, a battery cell may include an outer package. The outer package may be used to encapsulate the electrode assembly and the electrolyte described above.

In an embodiment, the outer package of the battery may be a hard shell, such as a hard plastic shell, an aluminum shell, and a steel shell. The outer package of the battery may also be a pouch, such as a bag-type pouch. The material of the pouch may be plastic, and examples of the plastic include polypropylene, polybutylene terephthalate, and polybutylene succinate.

The shape of the battery cell is not particularly limited in the present application, and may be a cylindrical shape, a square shape, or any other shape. For example, FIG. 2 shows a battery cell 200 with a square structure as an example.

It should be understood that the battery cell 200 may include the lithium-ion battery in the foregoing embodiment.

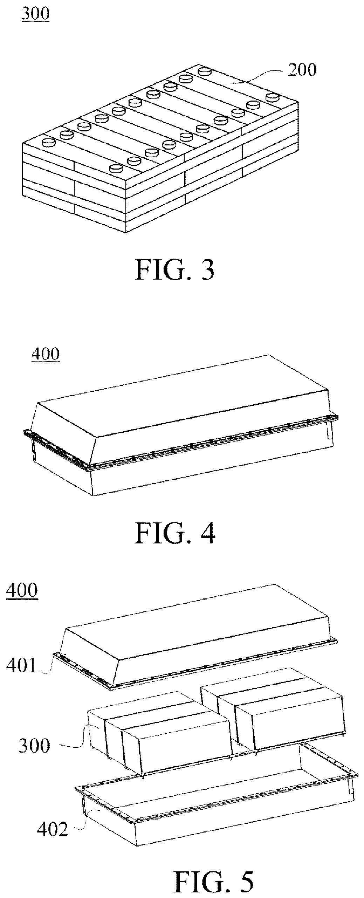

FIG. 3 shows a battery module 300 as an example. Referring to FIG. 3, in the battery module 300, a plurality of battery cells 200 may be arranged sequentially in the length direction of the battery module 300. Certainly, the secondary batteries may alternatively be arranged in any other manner. Further, the plurality of battery cells 200 may be fastened by using fasteners. The plurality of battery cells 200 may be battery cells 200 of the same chemical system or battery cells 200 of different chemical systems.

Optionally, in an embodiment, the battery module 300 may further include a housing having an accommodating space in which the plurality of battery cells 200 are accommodated.

Optionally, in an embodiment, the battery module 300 may be further assembled into a battery, and there may be one or a plurality of battery modules 300 included in the battery, and the specific number may be selected by those skilled in the art according to the application and capacity of the battery.

FIG. 4 and FIG. 5 show a battery 400 as an example. Referring to FIG. 3 and FIG. 4, the battery 400 may include a battery case and a plurality of battery modules 300 disposed in the battery case. The battery case includes an upper case 401 and a lower case 402, the upper case 401 being capable of covering the lower case 402 and forming a closed space for accommodating the battery modules 300. The plurality of battery modules 300 may be arranged in any manner in the battery case.

It should be understood that in some other embodiments, the battery 400 may also be referred to as a battery pack. The battery cells 200 may be first assembled into the battery module 300, and the battery 400 may be assembled from the battery module 300. The battery 400 may also be formed directly from the battery cells 200, and an intermediary form of the battery module 300 may be omitted.

In addition, the present application further provides an electric device, where the electric device includes at least one of the lithium-ion battery in the foregoing embodiment or the lithium-ion battery prepared by the method 100.

In another embodiment, the electric device includes at least one of the battery cell 200, the battery module 300, or the battery 400 provided herein. The battery cell 200, the battery module 300 or the battery 400 may be used as a power source or an energy storage unit of the electric device. The electric apparatus may include, but is not limited to, a mobile device (e.g., a cell phone or a notebook computer), an electric vehicle (e.g., a battery electric vehicle, a hybrid electric vehicle, a plug-in hybrid electric vehicle, an electric bicycle, an electric scooter, an electric golf cart, or an electric truck), an electric train, ship, or satellite, or an energy storage system.

For the electric device, the battery cell 200, the battery module 300 or the battery 400 may be selected according to its use requirements.

An electric device as an example. The electric device is a pure electric vehicle, a hybrid electric vehicle, a plug-in hybrid electric vehicle, or the like. In order to meet the demand for high power and high energy density of the secondary battery by the electric device, a battery pack or a battery module may be used.

In another example, the apparatus may be a cell phone, a tablet computer, a notebook computer, or the like. This electric device is generally required to be thin and lightweight, and may use a secondary battery as a power supply.

Embodiments of the present application are described below. The example described below are illustrative only and are not to be construed as limiting the present application. In the embodiments, specific techniques or conditions are not indicated, and they are performed according to techniques or conditions described in documents in the art or according to the specification of the product. The reagents or instruments used without specifying the manufacturer(s) are conventional products that are commercially available.

### [Examples 1-16 and Comparative Examples 1-3]

### Example 1

### (1) Preparation of a cathode plate

A cathode active material graphite, a conductive agent acetylene black, a binderstyrene-butadiene rubber (SBR), and a thickener sodium carboxymethyl cellulose (CMC) were dissolved in a solvent deionized water and uniformly mixed to obtain a cathode slurry. Then, the cathode slurry was uniformly coated on a cathode current collector copper foil. Further, cold pressing and slitting were performed to obtain the cathode plate. The lithiophilic metal in the cathode active material layer is prepared by an electrochemical reaction, which will be described in detail in the preparation process of the lithium-ion battery.

### (2) Preparation of an anode plate

An anode active material lithium nickel cobalt manganese oxide, a conductive agent acetylene black, and a binder polyvinylidene fluoride (PVDF) were dissolved in N-methylpyrrolidone (NMP) and uniformly mixed to obtain an anode electrode slurry. Then the anode slurry was uniformly coated on an anode current collector aluminum foil. Further, cold pressing and slitting were performed to obtain the anode plate.

### (3) Preparation of an electrolyte solution

An inorganic salt magnesium nitrate was added into a LiPF₆ electrolyte solution with a concentration of 1 mol/L, such that the mass fraction of magnesium nitrate in the electrolyte solution was 0.8%, and at this time, the content of the magnesium ion in the electrolyte solution was 1300 ppm, to obtain an electrolyte solution 1.

An inorganic salt magnesium nitrate was added into a LiPF₆ electrolyte solution with a concentration of 1 mol/L, such that the mass fraction of magnesium nitrate was 1.2%, and at this time, the content w2 of the magnesium ion in the electrolyte solution was 2000 ppm, to obtain an electrolyte solution 2.

The content of a substance in the electrolyte solution may be understood as the mass content of the substance in the electrolyte solution.

### (4) Preparation of a lithium-ion battery

An anode plate, a separator, and a cathode plate were stacked in sequence, such that the separator was disposed between the anode plate and the cathode plate and could separate the anode plate and the cathode plate; then the stacked members were wound into a case, the case was dried, the electrolyte solution 1 was injected, and the case was encapsulated to obtain a battery.

This battery was subjected to constant-voltage discharge under a voltage condition of 0.6 V (vs Li⁺/Li), such that the free magnesium ion in the electrolyte solution 1 is reduced to a lithiophilic metal (magnesium) on the surface of the cathode active material layer. The cathode plate at this time was examined to obtain the content w1 and the size d of the lithiophilic metal (magnesium). Then, the electrolyte solution 1 was removed, and the electrolyte solution 2 was added, followed by packaging to obtain a lithium-ion battery.

In Example 1, the content w1 of the lithiophilic metal in the cathode active material layer of the lithium-ion battery is 300 ppm, the size d of the lithiophilic metal is 2 nm, and the content w2 of the metal ion in the electrolyte solution is 2000 ppm.

### Example 2

Compared with Example 1, w1=100 ppm in Example 2.

### Example 3

Compared with Example 1, w1=1000 ppm in Example 3.

### Example 4

Compared with Example 1, w1=1200 ppm in Example 4.

### Example 5

Compared with Example 1, d=3 nm in Example 6.

### Example 6

Compared with Example 1, the lithiophilic metal is prepared by atomic layer deposition in Example 6. A specific process is as follows: by taking bis(cyclopentadienyl) magnesium as a precursor and ozone as a reactant, precursor pulsing for 300 s, nitrogen purging for 120 s, ozone purging for 40 s, and the nitrogen purging for 20 s were taken as one cycle, and metal magnesium was deposited on the surface of graphite through one cycle. Thus, the lithiophilic metal with d=0.3 nm was obtained.

### Example 7

Compared with Example 1, the lithiophilic metal is prepared by liquid phase deposition in Example 7. A specific process is as follows: magnesium chloride and graphite were mixed in water and stirred uniformly, water was removed by rotary evaporation, and the obtained sample was then reduced at 500°C for 2 h in an atmosphere containing a mixed gas of argon and hydrogen (95% Ar, 5% H₂), and the loaded sample was further acid-washed in 1 mol/L hydrochloric acid for 12 h, and then suction-filtered until a filtrate became neutral. Thus, the lithiophilic metal with d=20 nm was obtained.

### Example 8

Compared with Example 1, w2=500 ppm in Example 8.

### Example 9

Compared with Example 1, w2=50000 ppm in Example 9.

### Example 10

Compared with Example 1, w2=20000 ppm in Example 10.

### Example 11

Compared with Example 1, w2=400 ppm in Example 11.

### Example 12

Compared with Example 1, in Example 12, in the process of preparing the electrolyte solution, the inorganic salt added into the electrolyte solution 1 was magnesium hexafluorophosphate, and the mass fraction of magnesium fluorophosphate in the electrolyte solution 1 was 1.7%. The inorganic salt added into the electrolyte solution 2 was magnesium hexafluorophosphate, and the mass fraction of magnesium fluorophosphate in the electrolyte solution 2 was 2.6%. Thus, w2=2000 ppm in Example 12.

### Example 13

Compared with Example 1, in Example 13, in the process of preparing the electrolyte solution, the inorganic salt added into the electrolyte solution 1 was magnesium bistrifluoromethanesulfonimide, and the mass fraction of magnesium bis(trifluoromethanesulfonyl)imide in the electrolyte solution 1 was 3.2%. The inorganic salt added into the electrolyte solution 2 was magnesium bis(trifluoromethanesulfonyl)imide, and the mass fraction of magnesium bis(trifluoromethanesulfonyl)imide in the electrolyte solution 2 was 4.9%. Thus, w2=2000 ppm in Example 13.

### Example 14

Compared with Example 1, the lithiophilic metal in Example 14 is tin. Specifically, in the process of preparing the electrolyte solution, the inorganic salt added into the electrolyte solution 1 and the electrolyte solution 2 was tin nitrate, and the mass fractions thereof were 2.0% and 3.1%, respectively. In the process of preparing the lithium-ion battery, constant-voltage discharge was performed under a voltage condition of 2.0 V (vs Li⁺/Li), such that the free tin ion in the electrolyte solution 1 was reduced to the lithiophilic metal (tin) on the surface of the cathode active material layer. Then, the electrolyte solution 1 was removed, and the electrolyte solution 2 was added, followed by packaging to obtain a lithium-ion battery. In Example 14, w1=300 ppm, w2=2000 ppm, and d=2 nm.

### Example 15

Compared with Example 1, the lithiophilic metal in Example 15 is silver. Specifically, in the process of preparing the electrolyte solution, the inorganic salt added into both the electrolyte solution 1 and the electrolyte solution 2 was silver nitrate, and the mass fractions thereof were 0.9% and 1.4%, respectively. In the process of preparing the lithium-ion battery, constant-voltage discharge was performed under a voltage condition of 2.0 V (vs Li⁺/Li), such that the free silver ion in the electrolyte solution 1 was reduced to the lithiophilic metal (silver) on the surface of the cathode active material layer. Then, the electrolyte solution 1 was removed, and the electrolyte solution 2 was added, followed by packaging to obtain a lithium-ion battery. In Example 15, w1=300 ppm, w2=2000 ppm, and d=2 nm.

### Example 16

Compared with Example 1, the metal ion in Example 16 is a silver ion. Specifically, when the electrolyte solution 2 was prepared, the inorganic salt added was silver nitrate at a mass fraction of 1.4%. In Example 16, w2=2000 ppm.

### Comparative Example 1

Compared with Example 1, in Comparative Example 1, the cathode active material layer of the cathode plate has no lithiophilic metal, and the electrolyte solution has no metal ion. Specifically, in the process of preparing the lithium-ion battery, an anode plate, a separator, and a cathode plate were stacked in sequence, such that the separator was disposed between the anode plate and the cathode plate and could separate the anode plate and the cathode plate, and then the stacked components were wound into a case, and after the case was dried, a LiPF₆ electrolyte solution with a mass fraction of 12.7% was injected, and the case was encapsulated to obtain the lithium-ion battery.

### Comparative Example 2

Compared with Example 1, the cathode active material layer of the cathode plate in Comparative Example 2 includes the lithiophilic metal but does not include the metal ion in the electrolyte solution. Specifically, in the process of preparing the lithium-ion battery, after the electrolyte solution 1 was removed, a LiPF₆ electrolyte solution with the mass fraction of 12.7% was injected, and the case was encapsulated to obtain the lithium-ion battery.

### Comparative Example 3

Compared with Example 1, the cathode active material layer of the cathode plate in Comparative Example 3 has no lithiophilic metal but includes metal ion in the electrolyte solution. Specifically, in the process of preparing the lithium-ion battery, an anode plate, a separator, and a cathode plate were stacked in sequence, such that the separator was disposed between the anode plate and the cathode plate and could separate the anode plate and the cathode plate, and then the stacked components were wound into a case, after the case was dried, and an electrolyte solution 2 was injected, and the case was encapsulated to obtain the lithium-ion battery.

Details of product parameters in Examples 1-16 and Comparative Examples 1-3 are shown in Table 1

**Table 1: product parameters in Examples 1-16 and Comparative Examples 1-3**

| | Lithiophilic metal | Preparation method | w1 (ppm) | d (nm) | Inorganic salt | Metal ion | w2 (ppm) |
|---|---|---|---|---|---|---|---|
| Example 1 | Mg | Electrochemical reduction | 300 | 2 | Magnesium nitrate | Mg²⁺ | 2000 |
| Example 2 | Mg | Electrochemical reduction | 100 | 2 | Magnesium nitrate | Mg²⁺ | 2000 |
| Example 3 | Mg | Electrochemical reduction | 1000 | 2 | Magnesium nitrate | Mg²⁺ | 2000 |
| Example 4 | Mg | Electrochemical reduction | 1200 | 2 | Magnesium nitrate | Mg²⁺ | 2000 |
| Example 5 | Mg | Electrochemical reduction | 300 | 3 | Magnesium nitrate | Mg²⁺ | 2000 |
| Example 6 | Mg | Atomic layer deposition | 300 | 0.3 | Magnesium nitrate | Mg²⁺ | 2000 |
| Example 7 | Mg | Liquid phase deposition | 300 | 20 | Magnesium nitrate | Mg²⁺ | 2000 |
| Example 8 | Mg | Electrochemical reduction | 300 | 2 | Magnesium nitrate | Mg²⁺ | 500 |
| Example 9 | Mg | Electrochemical reduction | 300 | 2 | Magnesium nitrate | Mg²⁺ | 50000 |
| Example 10 | Mg | Electrochemical reduction | 300 | 2 | Magnesium nitrate | Mg²⁺ | 20000 |
| Example 11 | Mg | Electrochemical reduction | 300 | 2 | Magnesium nitrate | Mg²⁺ | 400 |
| Example 12 | Mg | Electrochemical reduction | 300 | 2 | Magnesium hexafluorophosphate | Mg²⁺ | 2000 |
| Example 13 | Mg | Electrochemical reduction | 300 | 2 | Magnesium bis (trifluoromethanesulfonyl) imide | Mg²⁺ | 2000 |
| Example 14 | Sn | Electrochemical reduction | 300 | 2 | Tin nitrate | Sn²⁺ | 2000 |
| Example 15 | Ag | Electrochemical reduction | 300 | 2 | Silver nitrate | Ag⁺ | 2000 |
| Example 16 | Mg | Electrochemical reduction | 300 | 2 | Silver nitrate | Ag⁺ | 2000 |
| Comparative Example 1 | / | / | / | / | / | / | / |
| Comparative Example 2 | Mg | Electrochemical reduction | 300 | 2 | / | / | / |
| Comparative Example 3 | / | / | / | / | Magnesium nitrate | Mg²⁺ | 2000 |

In Table 1, "lithiophilic metal" represents the lithiophilic metal in the cathode active material layer, "preparation method" represents the preparation method of the lithiophilic metal, "w1" represents the content of the lithiophilic metal in the cathode plate, "d" represents the size of the lithiophilic metal, "inorganic salt" represents a substance providing a metal ion in the electrolyte solution, "metal ion" represents the metal ion in the electrolyte solution, and "w2" represents the content of the lithiophilic metal in the electrolyte solution.

Performance tests are performed on the lithium-ion batteries in Examples 1-16 and Comparative Examples 1-3, and the obtained product performance data are shown in Table 2.

**Table 2: product performance data in Examples 1-16 and Comparative Examples 1-3**

| | Self-discharge of lithium-ion battery (mV/h) | Lithium-ion battery DCR (m Ω) | Number of cycles for failure of battery |
|---|---|---|---|
| Example 1 | 0.012 | 0.23 | Not failed after 1500 cycles |
| Example 2 | 0.011 | 0.21 | Not failed after 1500 cycles |
| Example 3 | 0.013 | 0.25 | Not failed after 1500 cycles |
| Example 4 | 0.017 | 0.34 | Not failed after 1500 cycles |
| Example 5 | 0.018 | 0.27 | Not failed after 1500 cycles |
| Example 6 | 0.012 | 0.23 | Not failed after 1500 cycles |
| Example 7 | 0.379 | 0.25 | Not failed after 1500 cycles |
| Example 8 | 0.012 | 0.23 | Not failed after 1500 cycles |
| Example 9 | 0.013 | 0.35 | Not failed after 1500 cycles |
| Example 10 | 0.012 | 0.28 | Not failed after 1500 cycles |
| Example 11 | 0.012 | 0.23 | Failed after 800 cycles |
| Example 12 | 0.012 | 0.23 | Not failed after 1500 cycles |
| Example 13 | 0.012 | 0.23 | Not failed after 1500 cycles |
| Example 14 | 0.012 | 0.23 | Not failed after 1500 cycles |
| Example 15 | 0.012 | 0.23 | Not failed after 1500 cycles |
| Example 16 | 0.012 | 0.24 | Not failed after 1500 cycles |
| Comparative Example 1 | 0.010 | 0.23 | Failed after 100 cycles |
| Comparative Example 2 | 0.012 | 0.22 | Failed after 500 cycles |
| Comparative Example 3 | 0.01 | 0.22 | Failed after 600 cycles |

According to the comparative analysis of Examples 1 to 16 and Comparative Examples 1 to 3, it may be seen that by introducing the metal ion into the electrolyte solution while introducing the lithiophilic metal into the cathode active material layer, the growth of the lithium dendrites may be continuously suppressed during long cycling of the battery, thereby effectively improving the cycle performance of the lithium-ion battery and prolonging the service life thereof.

For the DCR of the lithium-ion battery, it may be seen that the DCR of the lithium-ion batteries in Examples 1-16 is only slightly larger than that in Comparative Examples 1-3, but the cycle performance of the lithium-ion batteries all in Examples is significantly higher than that in Comparative Examples. It is described that the DCR of the lithium-ion battery is influenced to some extent by the introduction of the lithiophilic metal and the metal ion in the lithium-ion battery, but as a whole, it contributes to the significant improvement of the cycle performance of the lithium-ion battery. According to the comparative analysis of Examples 1-4, it may be seen that as the content w1 of the lithiophilic metal in the cathode plate increases, the DCR of the lithium-ion battery increases. The content w1 of the lithiophilic metal in the cathode plate in Example 4 is 1200 ppm, which exceeds the range of 100 ppm to 1000 ppm, and the DCR of the lithium-ion battery is significantly increased. Thus, it is described that by controlling w1 within an appropriate range, the cycle performance of the lithium-ion battery can be improved and the impedance of the lithium-ion battery can be prevented from being significantly increased.

For self-discharge of the lithium-ion batteries, it may be seen that the self-discharge performance of the lithium-ion batteries in Examples 1-16 is only slightly larger than that of the lithium-ion batteries in Comparative Examples 1-3, but the cycle performance of the lithium-ion batteries in Examples is significantly higher than that in Comparative Examples. It is described that the self-discharge of the lithium-ion battery is influenced to some extent by the introduction of the lithiophilic metal and the metal ion in the lithium-ion battery, but as a whole, it contributes to the significant improvement of the cycle performance of the lithium-ion battery. According to the comparative analysis of Example 1 and Examples 5-7, it may be seen that the lithiophilic metal in the cathode active material layer may be prepared by different methods such as electrochemical reduction, atomic layer deposition, and liquid phase deposition. Further, in Example 1 and Examples 5-6, the size d of the lithiophilic metal is smaller (0 nm<d≤3 nm), and the self-discharge of the lithium-ion battery is smaller. In Example 7, the size d of the lithiophilic metal reaches 20 nm, and the self-discharge of the lithium-ion battery is larger than that in Examples 5-6. If the self-discharge of the lithium-ion battery is further increased, it is disadvantageous in improving the cycle performance. Thus, it is described that by controlling the size of the lithiophilic metal within an appropriate range, the cycle performance of the lithium-ion battery can be improved, and the self-discharge of the lithium-ion battery is not significantly increased.

According to the comparative analysis between Example 1 and Examples 8-11, it may be seen that the content w2 of the metal ion in the electrolyte solution in the lithium-ion battery in Example 11 is 400 ppm, which is not in the range of 500 ppm to 50000 ppm. Since the content of the metal ion is too small, the effect of suppressing the lithium dendrites is limited, and the lithium-ion battery fails after 800 cycles. The lithium-ion batteries in other embodiments can be cycled after 1500 cycles without failure. Thus, it is described that by controlling the content of the metal ion within an appropriate range, the generation of the lithium dendrites can be continuously suppressed, which contributes to the improvement of the cycle performance of the lithium-ion battery. It may also be seen from Examples 8-10 that as the content of the metal ion in the electrolyte solution increases, the impedance of the lithium-ion battery increases. Therefore, it indicates that the impedance of the lithium-ion battery can be prevented from being significantly increased by controlling the content of the metal ion within an appropriate range.

Examples 12-13 illustrate that the lithiophilic metal may be provided by salts different from magnesium nitrate.

Examples 14-15 illustrate that the lithiophilic metal may also be tin or silver; and the metal ion may also be a tin ion or a silver ion.

In Example 16, the lithiophilic metal is magnesium and the metal ion is a silver ion, and thus it is described that the elements of the lithiophilic metal and the metal ion may be the same or different.

### [Examples 17-23 and Comparative Example 4]

### Example 17

The lithium-ion battery in Example 17 is a lithium-ion battery after 1500 cycles of the lithium-ion battery in Example 1. The lithium-ion battery is disassembled to examine the magnesium metal content w3 in the cathode plate of the lithium-ion battery and the magnesium metal content w4 in the electrolyte solution. In Example 17, w3=800 ppm and w4=200 ppm.

### Example 18

The lithium-ion battery in Example 18 is a lithium-ion battery after 10 cycles of the lithium-ion battery in Example 2. In Example 18, w3=100 ppm and w4=2000 ppm.

### Example 19

The lithium-ion battery in Example 19 is a lithium-ion battery after 1500 cycles of the lithium-ion battery in Example 2. In Example 19, w3=600 ppm and w4=900 ppm.

### Example 20

The lithium-ion battery in Example 20 is a lithium-ion battery after 1500 cycles of the lithium-ion battery in Example 4. In Example 20, w3=3000 ppm and w4=100 ppm.

### Example 21

The lithium-ion battery in Example 21 is a lithium-ion battery after 10 cycles of the lithium-ion battery in Example 8. In Example 21, w3=300 ppm and w4=500 ppm.

### Example 22

The lithium-ion battery in Example 22 is a lithium-ion battery after 1500 cycles of the lithium-ion battery in Example 8. In Example 22, w3=400 ppm and w4=100 ppm.

### Example 23

The lithium-ion battery in Example 23 is a lithium-ion battery after 1000 cycles of the lithium-ion battery in Example 9. In Example 23, w3=800 ppm and w4=48000 ppm.

### Comparative Example 4

Comparative Example 4 shows a lithium-ion battery after 100 cycles in Comparative Example 1.

### Comparative Example 5

Comparative Example 5 shows a lithium-ion battery after 500 cycles in Comparative Example 2.

### Comparative Example 6

Comparative Example 6 shows a lithium-ion battery after 600 cycles in Comparative Example 3.

Details of product parameters and performance parameters of Examples 17-23 and Comparative Examples 4-6 are shown in Table 3

**Table 3: product parameters and performance parameters in Examples 17-23 and Comparative Examples 4-6**

| | w1 (ppm) | w2 (ppm) | w3 (ppm) | w4 (ppm) | Number of cycles | Number of cycles for failure |
|---|---|---|---|---|---|---|
| Example 17 | 300 | 2000 | 800 | 200 | 1500 | >1500 |
| Example 18 | 100 | 2000 | 100 | 2000 | 10 | >1500 |
| Example 19 | 100 | 2000 | 600 | 900 | 1500 | >1500 |
| Example 20 | 1200 | 2000 | 3000 | 100 | 1500 | >1500 |
| Example 21 | 300 | 500 | 300 | 500 | 10 | >1500 |
| Example 22 | 300 | 500 | 400 | 100 | 1500 | >1500 |
| Example 23 | 300 | 50000 | 800 | 48000 | 1000 | >1500 |
| Comparative Example 4 | / | / | / | / | 100 | 100 |
| Comparative Example 5 | 300 | / | 200 | / | 500 | 500 |
| Comparative Example 6 | / | 2000 | 700 | 100 | 600 | 600 |

In Table 2, "w1" represents the content of the lithiophilic metal in the cathode plate in the lithium-ion battery before cycling, "w2" represents the content of the lithiophilic metal in the electrolyte solution in the lithium-ion battery before cycling, "w3" represents the content of the lithiophilic metal in the cathode plate in the lithium-ion battery after cycling, and "w4" represents the content of the metal ion in the electrolyte solution in the lithium-ion battery after cycling. "Number of cycles for failure" means the number of cycles for failure of the battery.

It may be seen from the data in Table 3 that the content of the lithiophilic metal in the lithium-ion battery after cycling correlates with the content of the lithiophilic metal before cycling. The content of the metal ion in the lithium-ion battery after cycling correlates with the content of the metal ion before cycling.

According to the comparative analysis of Example 17 and Comparative Examples 4-6, it may be shown that the introduction of the lithiophilic metal in the cathode active material layer and the introduction of the metal ion in the electrolyte solution may suppress the lithium dendrites continuously during long cycling of the lithium-ion battery, thereby effectively improving the cycle performance of the lithium-ion battery and prolonging the service life thereof.

According to the comparative analysis of Examples 18 to 19 and 21 to 22, it may be reasonable to speculate that during the long cycling of the lithium-ion battery, the lithium-metal alloy is formed with the lithiophilic metal in the cathode active material layer at the beginning of the lithium evolution of the lithium-ion battery (when the number of cycle cycles is small), because the lithium-metal alloy remains in the cathode active material layer and the metal ion in the electrolyte solution are not consumed at this time. Therefore, in Example 18 and Example 21, the contents of the lithiophilic metal before and after the cycle are consistent with the content of the metal ion. With further cycling of the battery, further lithium evolution occurs, the metal ion in the electrolyte solution is consumed after the lithium dendrites grow and pierce the SEI film, and the lithium-metal alloy is further formed. Thus, in Example 19 and Example 22, in the lithium-ion battery after the cycle, the content of the lithiophilic metal is significantly increased, and the content of the metal ion in the electrolyte solution is significantly decreased.

Methods for testing physicochemical parameters and performance parameters according to the examples of the present application will be briefly described below. It should be understood that the following test methods are by way of example only and that other test methods known in the art may be used for testing.

### 1. Test method for a reduction potential of a metal ion

According to the Nernst equation, the reduction potential of the metal ion with respect to lithium at a concentration of 1mol/L at different concentrations was calculated, and the metal ion might be reduced by selecting a potential with respect to lithium lower than this potential.

### 2. Method for testing a content

A part of a sample to be tested was taken, for example, a cathode plate and an electrolyte solution; and the content of the target element in the sample was directly measured by an inductively coupled plasma (ICP) test.

### 3. Method for testing a size

A part of a sample to be tested was taken, for example, a cathode plate. A microscopic photograph of the sample was obtained through transmission electron microscope (TEM) or spherical aberration corrected transmission electron microscope (AC-TEM) tests, thereby obtaining the size of the sample.

### 4. Method for testing self-discharge of the lithium-ion battery

The battery was charged at a constant-current of 0.33C to 3.75V (lithium nickel cobalt manganese oxide anode plate) and then charged a constant-voltage of 3.75 V to 0.05C. After the battery was left at normal temperature for 12 h, the voltage V0 of the battery was tested at this time, and then the battery was left for 48 h to test the voltage V1, and thus, self-discharge was (V1-V0)/48.

### 5. Method for testing DCR of the lithium-ion battery

The prepared lithium-ion battery was first discharged at a current of 0.33C to a voltage of 2.5V at 25°C, after being left for 30 min, the battery was charged at a current of 0.33C to a voltage of 4.3V, and then the battery was charged at a constant voltage of 4.3V till the current was less than 0.05C; and after being left for 30 min, the battery was discharged at a current of 0.33C to a voltage of 2.5V, and at this time, a capacity C₀ of the battery was obtained. Then, the battery was charged at a current of 0.33 C to a voltage of 4.3 V, further charged at a constant voltage of 4.3 V till the current is less than 0.05 C, and after being left for 30 min, the battery was discharged at a current of 0.33C to a capacity of 0.5C₀, such that the SOC of the lithium-ion battery was 50%, and at this time, the voltage of the battery was marked as V₁. Then, the battery was discharged at a current of 4C for 30 s, and at this time, the voltage of the battery was marked as V₂, and the DCR (unit m Ω) of the battery was obtained according to the formula (V₁-V₂) / (4C× 1000).

### 6. Method for testing number of cycles for failure of the lithium-ion battery

The lithium-ion battery was charged at a current of 2C till the voltage was 4.3 V, further charged at a constant voltage of 4.3 V till the current was less than 0.05C, and after being left for 30 min, the battery was discharged at a current of 1C till the voltage was 2.5 V. The above steps were repeated to record the number of cycles at which the capacity of the lithium-ion battery was attenuated to 80%.

Although this application has been described with reference to some preferred embodiments, various modifications to this application and replacements of the components therein with equivalents can be made without departing from the scope of this application. In particular, the technical features mentioned in the embodiments may be combined in any manner provided that there is no structural conflict. The present application is not limited to the specific embodiments disclosed herein, but includes all technical solutions falling within the scope of the claims.

## Claims

1. A lithium-ion battery, comprising:
a cathode plate, wherein a cathode active material layer of the cathode plate comprises a lithiophilic metal; and
an electrolyte solution, comprising a metal ion, wherein a reduction potential of the metal ion is higher than a reduction potential of a lithium ion.

2. The lithium-ion battery according to claim 1, wherein the lithiophilic metal is located on a surface of the cathode active material layer close to the electrolyte solution.

3. The lithium-ion battery according to claim 1 or 2, wherein the lithiophilic metal comprises at least one of Mg, Sn, Ag, Al, In, Zn, Ca, Sr, Ba, Sc, Y, Rh, Ir, Pd, Pt, Au, Cd, Ga, Ge, Pb, Sb, and Bi.

4. The lithium-ion battery according to any one of claims 1 to 3, wherein a content w1 of the lithiophilic metal in the cathode plate satisfies: 100 ppm≤w1≤1000 ppm.

5. The lithium-ion battery according to any one of claims 1 to 4, wherein the lithiophilic metal comprises a single atom and/or particles, and a size d of the particles satisfies: 0<d≤3 nm.

6. The lithium-ion battery according to any one of claims 1 to 5, wherein the metal ion comprises at least one of Mg²⁺, Sn⁴⁺, Ag⁺, Al³⁺, In³⁺, Zn²⁺, Ca²⁺, Sr²⁺, Ba²⁺, Sc⁺, Y³⁺, Rh³⁺, Ir³⁺, Pd³⁺, Pt³⁺, Au²⁺, Cd²⁺, Ga³⁺, Ge⁴⁺, Pb⁴⁺, Sb³⁺, and Bi³⁺.

7. The lithium-ion battery according to any one of claims 1 to 6, wherein a content w2 of the metal ion in the electrolyte solution satisfies 500 ppm≤w2≤50000 ppm, and optionally, 2000 ppm≤w2≤20000 ppm.

8. The lithium-ion battery according to any one of claims 1 to 7, wherein the electrolyte solution comprises an inorganic salt, and the inorganic salt comprises the metal ion and an anion; and
the anion comprises at least one of an acetate anion, a nitrate anion, a hexafluorophosphate anion, a perchlorate anion, and a bis (trifluoromethanesulfonyl) amine anion.

9. The lithium-ion battery according to any one of claims 1 to 8, wherein the lithiophilic metal is obtained by a chemical reaction.

10. The lithium-ion battery according to claim 9, wherein the chemical reaction comprises atomic layer deposition, liquid phase deposition, and solid phase deposition.

11. The lithium-ion battery according to any one of claims 1 to 8, wherein an SEI film of the cathode plate comprises at least one of a fluoride and a carbonate of the lithiophilic metal.

12. The lithium-ion battery according to claim 11, wherein the lithiophilic metal is obtained by an electrochemical reaction.

13. A lithium-ion battery, comprising:
a cathode plate, wherein a cathode active material layer of the cathode plate comprises a lithium-metal alloy; and
an electrolyte solution, comprising a metal ion, wherein a reduction potential of the metal ion is higher than a reduction potential of a lithium ion.

14. The lithium-ion battery according to claim 13, wherein the cathode active material layer comprises a lithiophilic metal, and the lithium-metal alloy comprises an alloy formed by lithium and the lithiophilic metal.

15. The lithium-ion battery according to claims 13 or 14, wherein the lithium-metal alloy further comprises an alloy formed by lithium and a metal obtained by reducing the metal ion.

16. The lithium-ion battery according to any one of claims 13 to 15, wherein the lithium-metal alloy is located on a surface of the cathode active material layer close to the electrolyte solution.

17. The lithium-ion battery according to any one of claims 14 to 16, wherein a content w3 of the lithiophilic metal in the cathode plate satisfies: 100 ppm≤w3≤3000 ppm.

18. The lithium-ion battery according to any one of claims 13 to 17, wherein the metal in the lithium-metal alloy comprises at least one of Mg, Sn, Ag, Al, In, Zn, Ca, Sr, Ba, Sc, Y, Rh, Ir, Pd, Pt, Au, Cd, Ga, Ge, Pb, Sb, and Bi.

19. The lithium-ion battery according to any one of claims 13 to 18, wherein the metal ion comprises at least one of Mg²⁺, Sn⁴⁺, Ag⁺, Al³⁺, In³⁺, Zn²⁺, Ca²⁺, Sr²⁺, Ba²⁺, Sc⁺, Y³⁺, Rh³⁺, Ir³⁺, Pd³⁺, Pt³⁺, Au²⁺, Cd²⁺, Ga³⁺, Ge⁴⁺, Pb⁴⁺, Sb³⁺, and Bi³⁺.

20. The lithium-ion battery according to any one of claims 13 to 19, wherein a content w4 of the metal ion in the electrolyte solution satisfies 100 ppm≤w4≤48000 ppm, and optionally 300 ppm≤w4≤19000 ppm.

21. A method for preparing a lithium-ion battery, comprising:
preparing a lithiophilic metal in a cathode active material layer of a cathode plate;
adding a metal ion into an electrolyte solution, wherein a reduction potential of the metal ion is higher than a reduction potential of a lithium ion; and
assembling the cathode plate and the electrolyte solution into a lithium-ion battery.

22. The method according to claim 21, wherein the preparing a lithiophilic metal in the cathode active material layer of the cathode plate comprises:
preparing the lithiophilic metal on a surface of the cathode active material layer close to the electrolyte solution.

23. The method according to claim 21 or 22, wherein the preparing a lithiophilic metal in a cathode active material layer of the cathode plate comprises:
preparing the lithiophilic metal by a chemical reaction.

24. The method according to claim 23, wherein the chemical reaction comprises atomic layer deposition, liquid phase deposition, and solid phase deposition.

25. The method according to claim 21 or 22, wherein the preparing a lithiophilic metal in a cathode active material layer of the cathode plate comprises:
preparing the lithiophilic metal by an electrochemical reaction.

26. The method according to claim 25, wherein the electrochemical reaction comprises:
reducing the metal ion at the reduction potential of the metal ion to obtain the lithiophilic metal.

27. The method according to claim 26, wherein an SEI film of the cathode plate comprises at least one of a fluoride and a carbonate of the lithiophilic metal.

28. The method according to any one of claims 21 to 27, wherein the adding the metal ion into the electrolyte solution comprises:
adding an inorganic salt into the electrolyte solution, wherein the inorganic salt comprises the metal ion and an anion, and the anion comprises at least one of an acetate anion, a nitrate anion, a hexafluorophosphate anion, a perchlorate anion, and a bis (trifluoromethanesulfonyl) amine anion.

29. The method according to any one of claims 21 to 28, wherein the lithiophilic metal comprises at least one of Mg, Sn, Ag, Al, In, Zn, Ca, Sr, Ba, Sc, Y, Rh, Ir, Pd, Pt, Au, Cd, Ga, Ge, Pb, Sb, and Bi.

30. The method according to any one of claims 21 to 29, wherein the metal ion comprises at least one of Mg²⁺, Sn⁴⁺, Ag⁺, Al³⁺, In³⁺, Zn²⁺, Ca²⁺, Sr²⁺, Ba²⁺, Sc⁺, Y³⁺, Rh³⁺, Ir³⁺, Pd³⁺, Pt³⁺, Au²⁺, Cd²⁺, Ga³⁺, Ge⁴⁺, Pb⁴⁺, Sb³⁺, and Bi³⁺.

31. An electric device, comprising at least one of the lithium-ion battery according to any one of claims 1 to 12, the lithium-ion battery according to any one of claims 13 to 20, and the lithium-ion battery prepared by the method according to any one of claims 21 to 30.
